# EUROPEAN PATENT SPECIFICATION

(11) **EP 4 239 998 B1**
(45) Date of publication and mention of the grant of the patent: **30.07.2025**
(21) Application number: 21924491.0
(22) Date of filing: 31.12.2021
(51) Int. Cl.: H04N 23/51, H04N 23/52, G08B 13/196

(54) **P-DIRECTION ADJUSTING STRUCTURE AND DOME CAMERA**
P-RICHTUNGSANPASSUNGSSTRUKTUR UND DOMKAMERA
STRUCTURE DE RÉGLAGE DE DIRECTION P ET CAMÉRA DÔME

(30) Priority: 07.02.2021 CN 202110168516
(43) Date of publication of application: 06.09.2023
(73) Proprietor: Hangzhou Hikvision Digital Technology Co., Ltd., Hangzhou, Zhejiang 310051 (CN)
(72) Inventor: YU, Gang, Hangzhou, Zhejiang 310051 (CN); ZHENG, Le, Hangzhou, Zhejiang 310051 (CN)
(74) Representative: Epping - Hermann - Fischer
(86) International application number: PCT/CN2021/143569
(87) International publication number: WO 2022/166498

(56) References cited:
- WO-A1-2009/136679
- CN-A- 1 801 892
- CN-A- 101 258 739
- CN-A- 113 055 564
- CN-U- 201 788 348
- CN-U- 206 875 068
- CN-U- 212 251 866
- KR-A- 20130 016 672
- KR-B1- 101 252 748
- US-A1- 2006 147 194
- US-A1- 2014 348 498
- US-A1- 2016 085 069

## Description

The present application claims the priority to a Chinese Patent Application No. 202110168516.7, filed with State Intellectual Property Office of People's Republic of China on February 07, 2021 and entitled "P-direction Adjustable Structure of Hemispherical Camera".

### Technical Field

The present application relates to the technical field of a camera, and in particular to a P-direction adjustable structure and a hemispherical camera.

### Background

At present, for most hemispherical cameras, they have relatively complex structures, and the method for adjusting the lens component along the P-direction is relatively complex when setting up the camera.

US2006147194A1 discloses a surveillance camera assembly including a mounting apparatus that is attachable to a mounting surface. A camera head assembly is secured to the mounting apparatus by moving the camera head assembly toward the mounting apparatus in a direction along an axis, and rotating the camera head assembly about the axis. The camera head assembly includes a camera head base for engaging the mounting apparatus. A camera head is coupled to the camera head base. The camera head is rotationally locked to the camera head base when the camera head base engages the mounting apparatus, and is rotatable relative to the camera head base after the camera head assembly has been rotated about the axis.

CN101258739A discloses a dome type camera comprising a camera , a lower case having a first serration, an upper case, a dome cover, and a inner cover having a second serration, wherein the upper case can be mounted to the lower case at two-step mounting positions, an adjusting position and a locking position. When the mounting position of the upper case is at the adjusting position, the first serration engages with the second serration imperfectly to allow the inner cover to rotate freely with respect to the lower case; when the mounting position of the upper case is at the locking position, the first serration engages with the second serration perfectly to fix the inner cover to the lower case. The direction of the cover can be easily adjusted even after the cover is mounted, thereby improving the work efficiencies of installation work and adjusting work.

WO2009136679A1 discloses a support device for camera modules. The support device is capable of panning or spinning a camera module without separating an outer casing that surrounds the camera module. The support device includes a body, a second middle support unit, a rear cover, and a rotary support unit. The body includes a camera module therein. The second middle support unit is rotatably fitted to a side surface of the body, and has on an outer surface of the second middle support unit two opposing wheels to be fitted into coupling bosses of the rotary support unit. The rear cover is coupled to the second middle support unit, and has on an inner surface thereof a seating step so that the body is rotatably seated thereon. The rotary support unit has the two coupling bosses to support the two wheels of the second middle support unit.

KR101252748B1 discloses a lens control device to be mounted on a new or existing module mounting ring for improving productivity. A lens control device comprises a housing which is formed by coupling a dome type transparent cover, a body, and a base to each other; a disc plate which rotates on the base in the horizontal direction; one pair of perpendicular frames which is mounted on the disc plate; a module mounting ring which is coupled to the perpendicular frames by a hinge bolt; upper/lower fastening holes which are formed on both sides of the front of the module mounting ring; and a lens control unit. A lens control unit comprises a stop ring which is disposed at the center of a upper/lower cover; a focus control member which forms an operation lever protruded in the inner diameter to operate a focus control lever; and a distance control member which ejects an operation lever protruded in the inner diameter to operate a distance control lever.

### Summary

The present invention is defined by the features of the independent claim(s). Preferred advantageous embodiments thereof are defined by the sub-features of the dependent claims. Any reference to "embodiment(s)", "example(s)" or "aspect(s) of the invention" in this description not falling under the scope of the claims should be interpreted as illustrative example(s) for understanding the invention.

### Brief Description of the Drawings

In order to describe the technical solutions of embodiments of the present application or of the prior art more clearly, a simple introduction of the drawings required in the description of the embodiments and of the prior art will be given. Obviously, the drawings described below are just for some embodiments of the present application and other embodiments may be obtained by those of ordinary skills in the art based on these drawings without any creative effort.
Fig.1 is a schematic view illustrating the P-direction, R-direction, and T-direction of the hemispherical camera;
Fig.2 is a perspective view of the hemispherical camera in the embodiments of the present application;
Fig.3 is a schematic exploded view of the hemispherical camera in Fig.2;
Fig.4 is a schematic view of the structure of the wire hidden case;
Fig.5 is a partial enlarged view of portion A in the wire hidden case of Fig.4, showing the teeth structure;
Fig.6 is a schematic cross-sectional view of the base;
Fig.7 is a schematic enlarged view of portion B in the base of Fig.6;
Fig.8 is a schematic view of the structure of the upper cover component from a perspective;
Fig.9 is a schematic view of the structure of the upper cover component from another perspective;
Fig.10 is a perspective view of the connecting structure between the base and the wire hidden case;
Fig.11 is a schematic enlarged view of portion C of Fig.10;
Fig.12 is a schematic perspective view showing the installation method of the lens component;
Fig.13 is a schematic perspective view showing the installation method of the upper cover component;
Fig.14 is a schematic perspective view showing the engagement method between the pin and the teeth;
Fig.15 is a schematic view showing the sealing structure between the upper cover and the transparent hood;
Fig.16 is a schematic view showing the sealing structure between the upper cover and the base.

### REFERENCE SIGNS:

1- lens component;
2- upper cover component; 21- upper cover; 22- transparent hood; 23- driving protrusion; 24- silicone plug; 25- first sealing ring;
3- pin; 31- head; 32- tail; 33- snap spring; 34- elastic component;
5- base; 51- first through hole; 52- second sealing ring;
6- damper;
7- wire hidden case; 71- teeth;
8- plate;
91- fastening screw; 92- tightening screw.

### Detailed Description

In the drawings, the same reference signs refer to identical or similar or functionally identical elements. The embodiments of the present application will be further described in detail below with reference to the appended drawings.

In the description of the present application, the terms "center", "longitudinal", "transversal", "front", "back", "left", "right", "vertical", "horizontal", "top", "bottom", "inside", "outside", and other indications of orientation or positional relationships are based on the orientation or positional relationships shown in the drawings. These terms are used only for the convenience of describing the present application and simplifying the description, rather than indicating or implying that the device or element must have a specific orientation, and/or be constructed and operated in a specific orientation, and therefore are not to be construed as a limitation on the scope of protection of the present application.

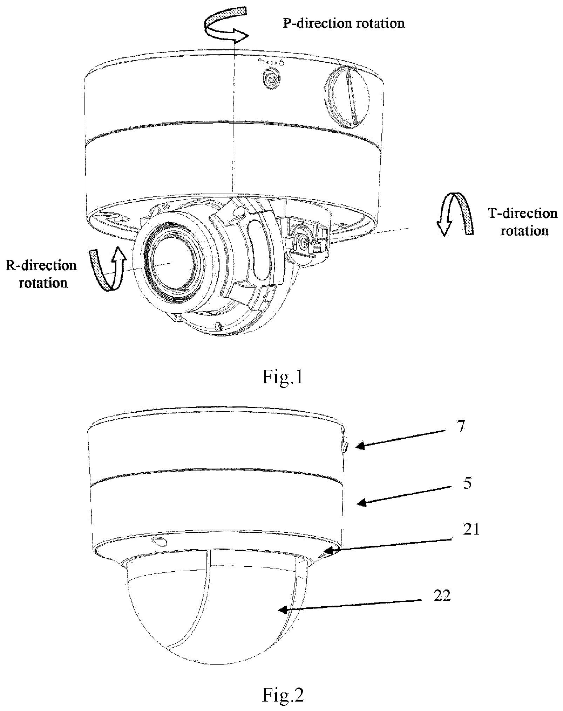

As shown in Fig. 1, the angle adjustment of a hemisphere camera includes adjusting in three directions. After the camera is installed, the lens can be pointed at the area to be monitored through an angle adjustment mechanism in three directions.

The directions of the three-axis adjustment of the hemisphere are shown in the following figure.

The P-direction refers to a rotation direction of which the rotation normal is perpendicular to the installation surface.

The R-direction refers to a rotation direction of which the rotation normal coincides with the axis of the lens.

The T-direction refers to a rotation direction where the rotation normal is perpendicular to the rotation normal of the P-direction and the rotation normal of the R-direction.

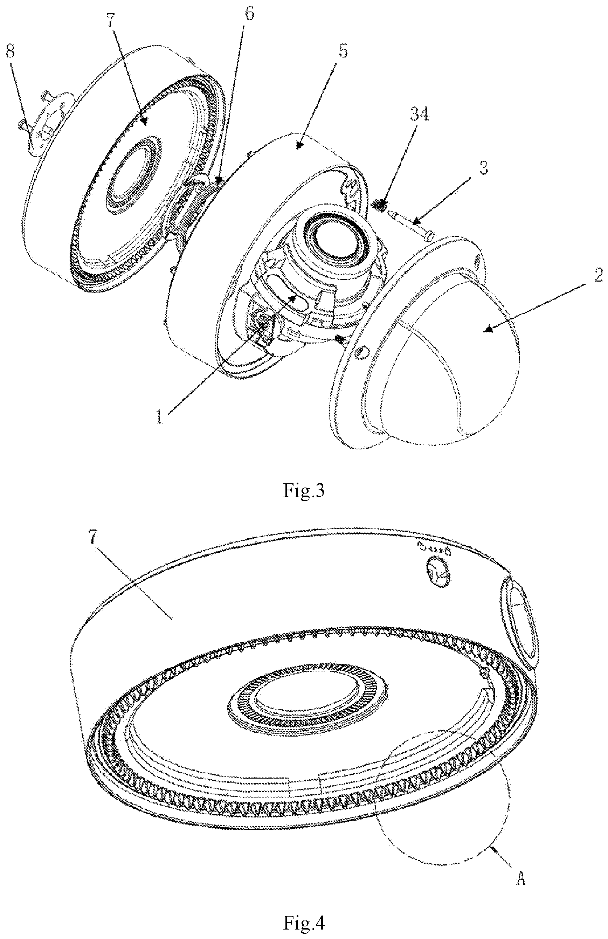

As shown in Figs.2 and 3, the P-direction adjustable structure of the embodiments of the present application, which is applied to a hemispherical camera, includes: an upper cover component 2, a pin 3, a cylindrical base 5, and a cylindrical wire hidden case 7. The base 5 and the wire hidden case 7 are connected to each other in a relatively rotatable manner. The upper cover component 2 is provided with a raised part to drive the pin 3 to move from a releasing position to a locking position. In the locking position, the pin 3 locks the rotation of the base 5 relative to the wire hidden case 7; in the releasing position, pin 3 releases the locking, allowing for a P-direction adjustment. When the upper cover component 2 is installed on the base 5, the raised part on the upper cover component 2 drives the pin 3 to move from the releasing position to the locking position.

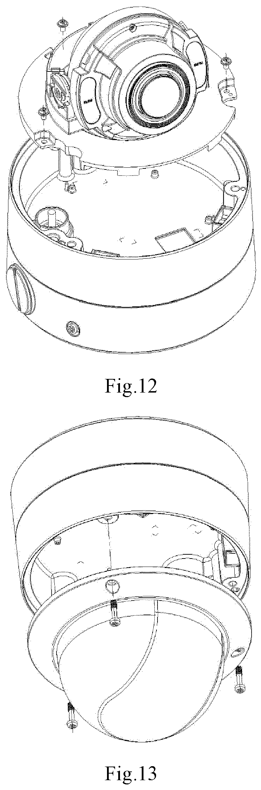

Specifically, as shown in Figs.2 to 13, the P-direction adjustable structure according to the embodiments of the present application includes: a lens component 1, an upper cover component 2, a pin 3, an elastic component 34, a base 5, a damper 6, a wire hidden case 7, and a plate 8. The wire hidden case 7 and the base 5 are arranged to rotate relative to each other. That is, a rotating gap or a rotating play exists between the wire hidden case 7 and the base 5.

The lens component 1 can rotate vertically and axially. That is, the lens component 1 can achieve the rotation along the T-direction and R-direction.

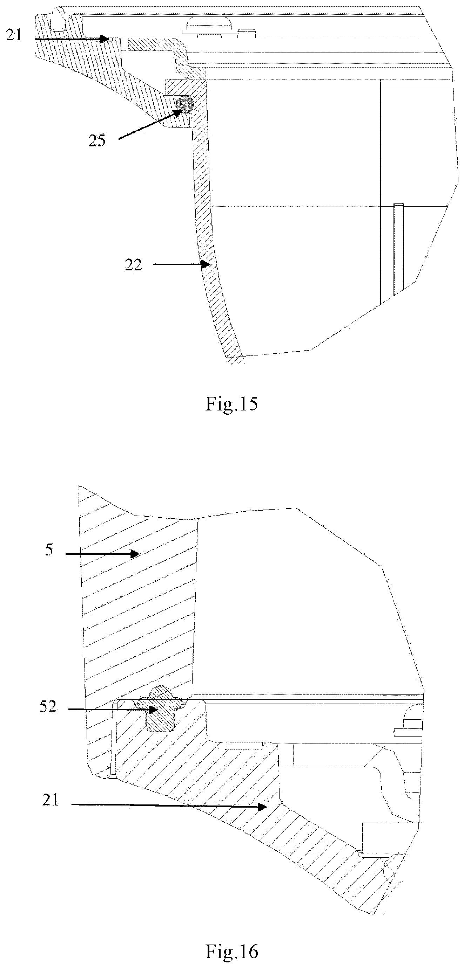

As shown in Fig.15, the upper cover component 2 mainly includes an upper cover 21 and a hemispherical transparent hood 22. The upper cover 21 and the transparent hood 22 are fixedly connected and cannot rotate relative to each other. A first sealing ring 25 is arranged between the upper cover 21 and the transparent hood 22. The upper cover 21 and the transparent hood 22 are pressed against each other directly or through other pieces in order to compress the first sealing ring 25 and achieve sealing.

The transparent hood 22 can be completely transparent, or can be a light insulating transparent hood 22 with a light insulating strip or a shading part (for example, only the middle portion is arranged to be transparent). When using the hemisphere with the light insulating transparent hood 22 and adjusting the lens along the P-direction, the transparent hood 22 must rotate together and remain relatively stationary with the lens; otherwise, the lens will generate interference with the light insulating strip of the transparent hood 22.

The upper cover component 2 is provided with a raised part for driving the pin 3. The raised part can adopt any appropriate shape and structure, which is not limited by the illustrated embodiments.

The upper cover component 2 is installed on the base; the upper cover component 2 is provided with a raised part, which can drive the pin 3 to switch between the releasing position and the locking position; when the pin 3 is switched to the locking position, the rotational degree of freedom of the base 5 with respect to the wire hidden case 7 is locked; when the pin 3 is switched to the releasing position, the locking is released.

In the illustrated embodiment, the raised part is a driving protrusion 23 arranged on the upper cover 21. The driving protrusion 23 is integrally formed with the upper cover 21, or is fixed on the upper cover 21 or the upper cover component 2 in other ways. When the upper cover component 2 is installed on the base 5, the raised part on upper cover component 2 drives the pin 3 to move from the releasing position to the locking position.

The driving protrusion 23 is used to drive the pin 3 to move from the releasing position to the locking position. In the locking position, the pin 3 locks the rotation of the base 5 relative to the wire hidden case 7; and in the releasing position, the pin 3 releases the locking. That is, the driving protrusion 23 is used for locking and releasing the relative angle between the wire hidden case 7 and the base 5.

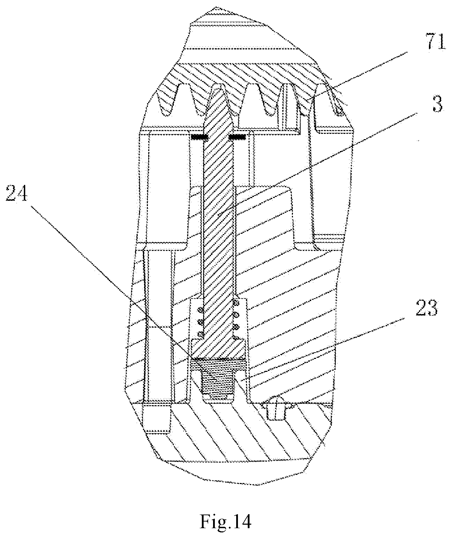

In some embodiments, an elastic body is arranged on the raised part or the driving protrusion 23, which is in contact with the pin 3 through the elastic body. Examples of the elastic body include a silicone plug 24 or a silicone cap arranged on the raised part or driving protrusion 23. As shown in Fig.14, the thin rod part of the silicone plug 24 is inserted into the central hole on the driving protrusion 23 in an interference fit manner, and the end of the silicone plug 24 is pressed against the flat surface of the driving protrusion 23.

The pin 3 is arranged on the base 5 in a movable manner and has an anti detachment structure to prevent the pin 3 from falling off the base 5.

Specifically, the pin 3 passes through the first through hole 51 on the base 5. The first end of pin 3 (the tail 32 in the figures) faces (i.e. aligns with) the raised part or the driving protrusion 23, and the second end (head 31) faces (i.e. aligns with) a locking structure arranged on the wire hidden case 7. As mentioned above, the pin 3 can move between the releasing position and the locking position.

In the locking position, the first end of pin 3 engages with the locking structure on the wire hidden case 7, thereby preventing pin 3 from rotating relative to the wire hidden case 7. Furthermore, the base 5 and wire hidden case 7 are prevented from rotating relative to the wire hidden case 7. It can be understood that after the P-direction adjustment is in place, it is necessary to keep pin 3 in the locking position.

In the releasing position, the first end of pin 3 disengages with the locking structure on the wire hidden case 7, thereby no longer preventing pin 3 from rotating relative to the wire hidden case 7, in other words, allowing pin 3 to rotate relative to the wire hidden case 7. In this case, the base 5 and wire hidden case 7 are allowed to rotate relative to the wire hidden case 7. It can be understood that when a P-direction adjustment is required, it is necessary to keep pin 3 in the releasing position.

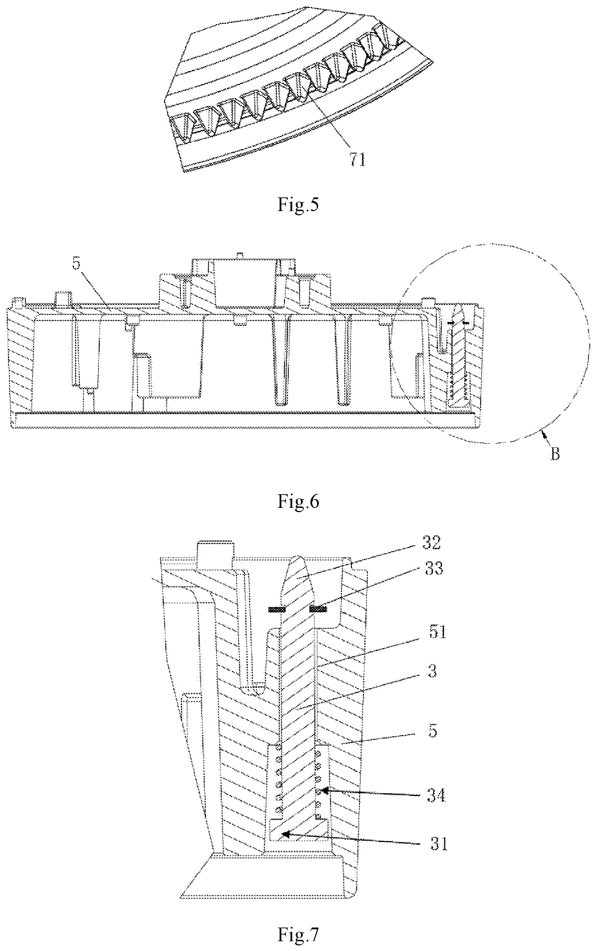

As shown in Figs.5 to 7, the second end of pin 3 is the head 31, and the first end is the tail 32. The head 31 is a radial expansion part, and its radial size is larger than the radial size of the rod part of the pin 3. The size and shape of the tail 32 are arranged to fit with the locking structure on the wire hidden case 7. For example, the tail 32 is arranged in the shape of a wedge as shown in the figure to match the teeth 71 arranged in a circular array on the wire hidden case 7. The tail 32 can also be arranged in a conical shape to match the circular holes arranged in the circular array on the wire hidden case 7. In an alternative embodiment, the circular holes in the circular hole array are arranged to be separated from each other. In another alternative embodiment, the circular holes in the circular hole array are arranged to locally overlap, which can provide finer accuracy of the adjustment.

As mentioned above, the base 5 is arranged to rotate relative to the wire hidden case 7. And the pin 3 is used to control whether the base 5 can rotate relative to the wire hidden case 7 for achieving the P-direction adjustment.

The base 5 and the wire hidden case 7 can be assembled in any appropriate way, as long as the base 5 can rotate relative to the wire hidden case 7. In some embodiments, the wire hidden case 7 is fixedly installed on mounting bases such as ceilings, columns, etc.

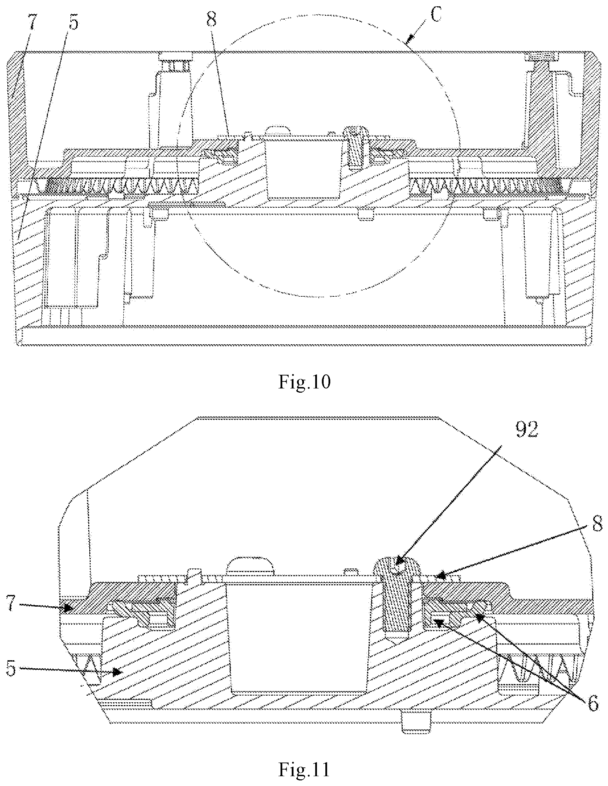

In the illustrated embodiment, the base 5 and the wire hidden case 7 are assembled in the following manner. Referring to Figs.10 and 11, the tightening screw 92 passes through the plate 8 and is pressed to the base 5, and the wire hidden case 7 is clamped between the plate 8 and the base 5. Thus, the assembly between the base 5 and the wire hidden case 7 is achieved. A gap exists between the wire hidden case 7 and the base 5 in an up-down direction, and a hole-shaft fit is formed at a middle portion. It can be the wire hidden case 7 with a matching hole and the base 5 with a matching shaft, or the wire hidden case 7 with a matching shaft and the base 5 with a matching hole. The relative rotation of the wire hidden case 7 and the base 5 is achieved or constrained by the hole-shaft fit.

A damper 6 is arranged in the gap between the wire hidden case 7 and the base 5, which can generate a sense of damping during rotation. The damper 6 can be made of any suitable material, structure, or shape. For example, in the illustrated embodiment, two separate dampers 6 are provided, one being fixed relative to the wire hidden case 7 and the other being fixed relative to the base 5. In an alternative embodiment not shown, only one damper 6 is provided, and the damper 6 is only provided between the wire hidden case 7 and the base 5, without being fixed relative to any one of the wire hidden case 7 and the base 5.

As shown in Fig.7, the base 5 is provided with pins 3 that can move axially. Specifically, the base 5 is provided with a first through hole 51. The pin 3 is inserted into the first through hole 51. It can be understood that the pin 3 is arranged in a gap fit manner within the first through hole 51. The pin 3 is restricted by an anti drop structure in the base 5 and cannot fall out.

In the illustrated embodiment, the anti drop structure is the snap spring 33. The snap spring 33 is clamped in the circular groove at the tail 32 of the pin 3, thereby preventing the pin 3 from falling off the base 5. The outer diameter of the snap spring 33 is greater than the diameter of the rod part of the pin 3. That is, outer diameters of the head 31 and the snap spring 33 are greater than a diameter of the first through hole 51. It should be pointed out that the anti drop structure can also use any other suitable structure such as an anti drop screw, a split pin that cross the pin 3, etc.

In an initial state (a natural state), the pin 3 is in the releasing position. For this purpose, an elastic component 34 is provided. In the embodiment of Fig.4, the elastic component 34 is a compression spring. Specifically, the elastic component 34 is arranged between the head 31 of the pin 3 and the base 5, that is, the two ends of the elastic component 34 abut against the head 31 and the base 5, respectively. In the natural state, the elastic component 34 raises the pin 3, so that the pin 3 is in the releasing position.

In order to avoid the pin 3 shaking inside and affecting the tightening effect, there should not be too much gap left between the pin 3 and the first through hole 51 on the base 5. In some embodiments, the value of the single-side gap is 0.1mm-0.3mm. For example, the single-side gap is set to be 0.2mm.

As shown in Fig.5, in the illustrated embodiment, the locking structure on the wire hidden case 7 is specifically teeth 71 arranged in a circular array. Correspondingly, the tail 32 is arranged in the shape of a wedge as shown in the figure to match the teeth on the wire hidden case 7. The locking is achieved by inserting and fitting the tail 32 between the adjacent teeth 71. This prevents the base 5 from rotating relative to the wire hidden case 7.

In an alternative embodiment, the teeth 71 are located at the radial edge position of the wire hidden case 7. The advantage of this is that the force arm can be increased during the limit, reducing the force applied by the same torque on the teeth 71 and improving reliability.

In the illustrated embodiment, the base 5 is directly exposed as part of the appearance of the camera. Thus, in the releasing state, the base 5 can be directly rotated for achieving the P-direction adjustment.

In the illustrated embodiment, the lens component 1 is directly installed on the base 5. Therefore, the base 5 is used as a heat dissipation component and is directly exposed, greatly improving the heat dissipation efficiency compared to the technical solution where the heat dissipation component is installed inside the housing.

Specifically, the lens component 1 and the base 5 are fixed by a screw. After being fixed, the lens component 1 and the base 5 are relatively stationary and can rotate together relative to the wire hidden case 7. Due to the relative stationariness of the base 5 and the upper cover component 2, the lens component 1 is also relatively stationary relative to the transparent hood 22. In other words, the lens component 1 is integrated with the transparent hood 22 in the P-direction rotation.

The upper cover 21 and the base 5 are fixed with a screw. After being fixed, the lens component 1, base 5, and the upper cover 21 are relatively stationary.

The tightening and the loosening in the P-direction is mainly completed by three components: the wire hidden case 7, the base 5, and the upper cover component 2.

When the upper cover component 2 and the base 5 are tightened by a fastening screw 91, the tightening in the P-direction is performed; when the fastening screw 91 is loosened to loosen or remove the upper cover component 2, the loosening in the P-direction is performed, allowing for achieving a P-direction adjustment.

After the assembly of the base 5 and the wire hidden case 7 is completed, the pin 3 on the base 5 is located directly below or above the teeth 71 of the wire hidden case 7. When the elastic component 34 is in the natural state, the pin 3 is raised; the pin 3 and the teeth 71 are not in contact, and the wire hidden case 7 and base 5 can rotate relative to each other, indicating a loosening state.

After the upper cover component 2 and the base 5 are tightened with a screw, due to the installation of a foolproof positioning structure between the upper cover component 2 and the base 5, the protrusion of the upper cover component 2 will inevitably be inserted into the hole of the base 5. The protrusion will raise the pin 3 upwards and the pin 3 is inserted into the teeth 71 of the wire hidden case 7, thereby limiting the relative rotation of the wire hidden case 7 and the base 5. The elastic body on the protrusion and the pin 3 are designed with a certain amount of interference to ensure close contact between the pin 3 and the teeth 71, avoiding any gap between the pin 3 and the teeth 71 that may cause shaking.

As shown in Fig. 16, the upper cover component 2 and the base 5 form one sealed chamber, and the lens component 1 is arranged in the sealed chamber. The PCB is also placed in the sealed chamber. The sealed chamber can use static sealing and waterproofing, and the sealing and waterproofing method is reliable. A second sealing ring 52 is arranged between the upper cover component 2 and the base 5, and the upper cover 21 and the base 5 are tightened with a screw to compress the silicone and achieve sealing. The upper cover component 2 and the base 5 are relatively fixed, forming a relatively static chamber that can be sealed statically, with reliable sealing and simple structure.

In addition, as mentioned above, the base 5 is directly exposed, and the PCB (not shown) and lens component 1 are directly installed on the base 5. The base 5 is used as a heat dissipation component and is directly exposed, which greatly improves the heat dissipation efficiency compared to the technical solution of arranging the heat dissipation component inside the housing.

In an optional embodiment of the present application, the P-direction adjustable structure includes a camera directional element, or a camera directional element is installed on the P-direction adjustable structure. Specifically, a camera directional element that rotates together with the base is installed on the base 5, so that when performing the P-direction adjustment, the directions of the camera directional element and the lens can be adjusted simultaneously. For example, the camera directional element include a microphone, a speaker, and/or a PIR (passive infrared sensor).

Thus, when performing the P-direction angle adjustment on the lens, the transparent hood 22 and the camera directional element can rotate together and remain relatively stationary with the lens. This solution is particularly suitable for the hemispherical camera with a light insulating transparent hood.

The tightening operation in the P-direction is very simple, as long as the upper cover 21 is normally shut and fastened, without a redundant operation.

Another aspect of the present application proposes a hemispherical camera, including a lens component 1, an upper cover component 2, a cylindrical base 5, and a cylindrical wire hidden case 7. The upper cover component 2 includes a hemispherical transparent hood 22, which hoods the lens component 1. The base 5 supports the lens component 1 and the upper cover component 2, the cylindrical wire hidden case 7 supports the base 5, and the surface in the wire hidden case 7 which is in contact with the base 5 is provided with a through hole for receiving the wires of the lens component 1 through the base 5. Wherein, the circumferential edge of the surface of the wire hidden case 7 is provided with teeth, and the wire hidden case 7 is defined such that: when the wire hidden case 7 is in non-fastened connection with the base 5, the base 5 can drive the lens component 1 and the wire hidden case 7 to rotate in the P-direction, so that the lens component 1 rotates to a preset angle; and when the wire hidden case 7 is in fastened connection with the base 5, the teeth of the wire hidden case 7 prevent the base 5 from rotating in the P-direction, so that the lens component 1 is defined at the preset angle.

The upper cover component 2 includes a hemispherical transparent hood 22, which hoods the lens component 1. For example, the transparent hood 22 can be completely transparent, or can be a light insulating transparent hood 22 with a light insulating strip or a shading part, for example, only the middle portion is arranged to be transparent. When using the hemisphere with the light insulating transparent hood 22 and adjusting the lens along P-direction, the transparent hood 22 must rotate together and remain relatively stationary with the lens; otherwise, the lens will generate interference with the light insulating strip of the transparent hood 22.

The wire hidden case 7 and the base 5 are arranged to rotate relative to each other. That is, a rotating gap or a rotating play exists between the wire hidden case 7 and the base 5. A surface of the wire hidden case 7 in contact with the base 5 is provided with a through hole for receiving the wires of the lens component 1 through the base 5. In an alternative embodiment, the teeth 71 are located at the radial edge position of the wire hidden case 7. The advantage of this is that the force arm can be increased during the limit, reducing the force applied by the same torque on the teeth 71 and improving reliability.

When the wire hidden case 7 is in non-fastened connection with the base 5, the base 5 can drive the lens component 1 and the wire hidden case 7 to rotate in the P-direction, so that the lens component 1 rotates to a preset angle. When the wire hidden case 7 is in fastened connection with the base 5, the teeth 71 of the wire hidden case 7 prevent the base 5 from rotating in the P-direction, so that the lens component 1 is defined at the preset angle.

The base 5 and the wire hidden case 7 have the same first axis, and the rotating in the P-direction refers to a horizontal rotation around the first axis.

The hemispherical camera also includes a pin 3. When the pin 3 comes into contact with the teeth 71, the wire hidden case 7 is in fastened connection with the base 5. When the pin 3 is loosened from the teeth 71, the wire hidden case 7 is in non-fastened connection with the base 5.

As shown in Fig.7, the pin 3 is in contact with the teeth 71 to enable the base 5 and wire hidden case 7 to switch between a fastened connection state and a non-fastened connection state. In the initial/natural state, the pin 3 is in the releasing position. For this purpose, an elastic component 34 is provided. In the embodiment of Fig.4, the elastic component 34 is a compression spring. Specifically, the elastic component 34 is arranged between the head 31 of the pin 3 and the base 5, that is, two ends of the elastic component 34 abut against the head 31 and the base 5, respectively. In the natural state, the elastic component 34 raises the pin 3, so that the pin 3 is in the releasing position.

In order to avoid the pin 3 shaking inside and affecting the tightening effect, there should not be too much gap left between the pin 3 and the first through hole 51 on the base 5. In some embodiments, the value of the single-side gap is 0.1mm-0.3mm. For example, the single-side gap is set to be 0.2mm.

As shown in Fig.5, in the illustrated embodiment, the teeth 71 on the wire hidden case 7 are arranged in a circular array. Correspondingly, the tail 32 is arranged in the shape of a wedge as shown in the figure to match the teeth on the wire hidden case 7. The locking is achieved by inserting and fitting the tail 32 between the adjacent teeth 71. This prevents the base 5 from rotating relative to the wire hidden case 7.

The pin 3 runs parallel to the first axis through the base 5.

As shown in Fig.7, the base 5 is provided with the pin 3 that can move axially. Specifically, the base 5 is provided with a first through hole 51. The pin 3 is inserted into the first through hole 51. It can be understood that the pin 3 is arranged in a gap fit manner within the first through hole 51.The pin 3 is restricted by an anti drop structure in the base 5 and cannot fall out.

In the illustrated embodiment, the anti drop structure is the snap spring 33. The snap spring 33 is clamped in the circular groove at the tail 32 of the pin 3, thereby preventing the pin 3 from falling off the base 5. The outer diameter of the snap spring 33 is greater than the diameter of the rod part of the pin 3. That is, outer diameters of the head 31 and the snap spring 33 are greater than a diameter of the first through hole 51. It should be pointed out that the anti drop structure can also use any other suitable structure such as an anti drop screw, a split pin that cross the pin 3, etc.

In the illustrated embodiment, the base 5 and the wire hidden case 7 are assembled in the following manner. Referring to Figs.10 and 11, the tightening screw 92 passes through the plate 8 and is pressed to the base 5, and the wire hidden case 7 is clamped between the plate 8 and the base 5. Thus, the assembly between the base 5 and the wire hidden case 7 is achieved. A gap exists between the wire hidden case 7 and the base 5 in an up-down direction, and a hole-shaft fit is formed at a middle portion. It can be the wire hidden case 7 with a matching hole and the base 5 with a matching shaft, or the wire hidden case 7 with a matching shaft and the base 5 with a matching hole. The relative rotation of the wire hidden case 7 and the base 5 is achieved or constrained by the hole-shaft fit.

When the upper cover component 2 is in non-fastened connection with the base 5, the pin 3 is loose from the teeth. When the upper cover component 2 is in fastened connection with the base 5, the pin 3 contacts the teeth 71.

The edge of upper cover component 2 includes a raised part, which extends towards the base 5. When the upper cover component 2 is in fastened connection with the base 5, the pin 3 is subjected to pressure applied by the raised part to contact the pin 3 with the teeth 71.

The upper cover component 2 is provided with a raised part for driving the pin 3. The raised part can adopt any appropriate shape and structure, which is not limited by the illustrated embodiments.

The upper cover component 2 is installed on the base; the upper cover component 2 is provided with a raised part, which can drive the pin 3 to switch between the releasing position and the locking position; when the pin 3 is switched to the locking position, the rotational degree of freedom of the base 5 and the wire hidden case 7 is locked; when the pin 3 is switched to the releasing position, the locking is released.

In the illustrated embodiment, the raised part is a driving protrusion 23 arranged on the upper cover 21. The driving protrusion 23 is integrally formed with the upper cover component 21, or is fixed on the upper cover 21 or the upper cover component 2 in other ways. When the upper cover component 2 is installed on the base 5, the raised part on upper cover component 2 drives the pin 3 to move from the releasing position to the locking position.

The hemispherical camera also includes an elastic component, which sleeves the pin 3 to enable the pin 3 to move in a direction parallel to the first axis when subjected to or not subjected to pressure applied by the raised part.

As shown in Fig.7, the base 5 is provided with pins 3 that can move axially. Specifically, the base 5 is provided with a first through hole 51. The pin 3 is inserted into the first through hole 51. It can be understood that pin 3 is arranged in a gap fit manner within the first through hole 51. The elastic component sleeves the pin 3 to enable pin 3 to move in a direction parallel to the first axis when subjected to or not subjected to pressure applied by the raised part. In the illustrated example, the elastic component 34 is a compression spring. Specifically, the elastic component 34 is arranged between the head 31 of the pin 3 and the base 5, that is, two ends of the elastic component 34 abut against the head 31 and the base 5, respectively. In the natural state, the elastic component 34 raises the pin 3, so that the pin 3 is located in the releasing position.

In order to avoid the pin 3 shaking inside and affecting the locking effect, there should not be too much gap left between the pin 3 and the first through hole 51 on the base 5. In some embodiments, the value of the single-side gap is 0.1mm-0.3mm. For example, the single-side gap is set to be 0.2mm.

The upper cover component 2 and the base 5 are tightened and fastened by a screw.

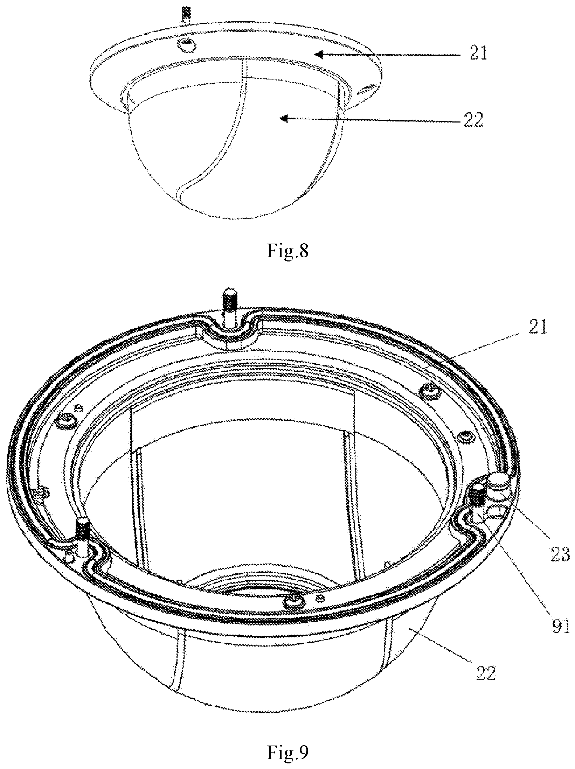

As shown in Fig.9, when the upper cover component 2 and the base 5 are tightened with the fastening screw 91, the tightening in the P-direction is performed; when the fastening screw 91 is loosened to loosen or remove the upper cover component 2, the loosening in the P-direction is performed, allowing for achieving the P-direction adjustment.

The lens component 1 can rotate in a pitch direction.

A camera directional element can be installed on the lens component 1. Specifically, a camera directional element that rotates together with the base is installed on base 5, so that during performing the P-direction adjustment, the direction of the camera directional element and the lens can be adjusted simultaneously. For example, the camera directional element includes a microphone, a speaker, and/or a PIR passive infrared sensor.

Thus, when performing the P-direction angle adjustment on the lens, the transparent hood 22 and the camera directional element can rotate together and remain relatively stationary with the lens. Finally, it should be pointed out that the above embodiments are only used to illustrate the technical solution of the present application, and not to limit it.

## Claims

1. A hemispherical camera, comprising:
a lens component (1);
an upper cover component (2) comprising a hemispherical transparent hood (22), which hoods the lens component (1);
a cylindrical base (5) supporting the lens component (1) and the upper cover component (2);
a cylindrical wire hidden case (7) supporting the base (5), wherein a surface of the wire hidden case (7) in contact with the base (5) is provided with a through hole for receiving a wire of the lens component (1) through the base (5);
wherein, a circumferential edge of the surface of the wire hidden case (7) is provided with teeth (71), and the wire hidden case (7) is defined such that:
when the wire hidden case (7) is in non-fastened connection with the base (5), the base (5) drives the lens component (1) to rotate in the P-direction relative to the wire hidden case (7), so that the lens component (1) rotates to a preset angle;
when the wire hidden case (7) is in fastened connection with the base (5), the teeth (71) of the wire hidden case (7) prevent the base (5) from rotating in the P-direction, so that the lens component (1) is defined at the preset angle,
wherein, the base (5) and the wire hidden case (7) have a same first axis;
the rotating in the P-direction refers to a horizontal rotation around the first axis,
wherein, the hemispherical camera also comprises a pin (3);
when the wire hidden case (7) is in fastened connection with the base (5), the pin (3) contacts the teeth (71);
when the wire hidden case (7) is in non-fastened connection with the base (5), the pin (3) is loosened from the teeth (71),
wherein, the pin (3) passes through the base (5) along a direction parallel to the first axis, wherein, when the upper cover component (2) is in non-fastened connection with the base (5), the pin (3) is loosened from the teeth (71);
when the upper cover component (2) is in fastened connection with the base (5), the pin (3) contacts the teeth (71),
wherein, an edge of the upper cover component (2) comprises a raised part, which extends towards the base (5);
when the upper cover component (2) is in fastened connection with the base (5), the pin (3) is subjected to a pressure applied by the raised part so that the pin (3) contacts the teeth (71).

2. The hemispherical camera as claimed in claim 1, wherein, the hemispherical camera also comprises an elastic component (34), which sleeves the pin (3), so that the pin (3) can move along a direction parallel to the first axis when subjected to or not subjected to the pressure applied by the raised part.

3. The hemispherical camera as claimed in claim 1, wherein,
the upper cover component (2) is tightened and fastened with the base (5) by a screw.

4. The hemispherical camera as claimed in claim 1, wherein, the lens component (1) can rotate in a pitch direction.

5. The hemispherical camera as claimed in claim 1, wherein,
the pin (3) passes through a first through hole (51) on the base (5); a first end of the pin (3) faces the raised part, and a second end of the pin (3) faces a locking structure arranged on the wire hidden case (7);
the raised part acts on the first end of the pin (3), so that the second end of the pin (3) is engaged with the locking structure.

6. The hemispherical camera as claimed in claim 5, wherein,
the first end of the pin (3) is a head (31) of the pin (3), and the second end of the pin (3) is a tail (32) of the pin (3);
a snap spring (33) is arranged at an axial position of the pin (3) adjacent to the tail (32), and outer diameters of the head (31) and the snap spring (33) are greater than a diameter of the first through hole (51).

7. The hemispherical camera as claimed in claim 5, wherein,
a single-side gap between the pin (3) and the first through hole (51) is within the range of 0.1mm-0.3mm.

8. The hemispherical camera as claimed in claim 6, wherein, the wire hidden case (7) comprises teeth (71) arranged in a circular array, and the teeth (71) are arranged at the radial edge position of the wire hidden case (7).

## Patentansprüche

1. Eine halbkugelförmige Kamera, umfassend:
ein Linsenelement (1);
ein oberes Abdeckelement (2) mit einer halbkugelförmigen transparenten Haube (22), die das Linsenelement (1) abdeckt;
eine zylindrische Basis (5), das das Linsenelement (1) und das obere Abdeckelement (2) trägt;
ein zylindrisches, verdecktes Drahtgehäuse (7), das die Basis (5) trägt, wobei eine Oberfläche des verdeckten Drahtgehäuses (7), die mit der Basis (5) in Kontakt steht, mit einem Durchgangsloch versehen ist, um einen Draht des Linsenelements (1) durch die Basis (5) aufzunehmen;
wobei ein Umfangsrand der Oberfläche des verdeckten Drahtgehäuses (7) mit Zähnen (71) versehen ist und das verdeckte Drahtgehäuse (7) so definiert ist, dass:
wenn sich das verdeckte Drahtgehäuse (7) in einer nicht befestigten Verbindung mit der Basis (5) befindet, die Basis (5) das Linsenelement (1) dazu antreibt, sich in P-Richtung relativ zum verdeckten Drahtgehäuse (7) zu drehen, so dass sich das Linsenelement (1) um einen voreingestellten Winkel dreht;
wenn sich das verdeckte Drahtgehäuse (7) in einer befestigten Verbindung mit der Basis (5) befindet, die Zähne (71) des verdeckten Drahtgehäuses (7) die Basis (5) daran hindern, sich in P-Richtung zu drehen, so dass das Linsenelement (1) im voreingestellten Winkel definiert ist,
wobei die Basis (5) und das verdeckte Drahtgehäuse (7) eine gleiche erste Achse aufweisen;
die Drehung in P-Richtung sich auf eine horizontale Drehung um die erste Achse bezieht,
wobei die halbkugelförmige Kamera auch einen Stift (3) umfasst;
wenn das verdeckte Drahtgehäuse (7) in einer festen Verbindung mit der Basis (5) steht, der Stift (3) die Zähne (71) berührt;
wenn das verdeckte Drahtgehäuse (7) nicht mit der Basis (5) verbunden ist, der Stift (3) von den Zähnen (71) gelöst wird,
wobei der Stift (3) die Basis (5) entlang einer zur ersten Achse parallelen Richtung durchdringt,
wobei, wenn das obere Abdeckelement (2) in einer nicht befestigten Verbindung mit der Basis (5) steht, der Stift (3) von den Zähnen (71) gelöst ist;
wenn das obere Abdeckelement (2) in einer befestigten Verbindung mit der Basis (5) steht, der Stift (3) die Zähne (71) berührt,
wobei eine Kante des oberen Abdeckelements (2) einen erhöhten Teil aufweist, der sich in Richtung der Basis (5) erstreckt;
wenn das obere Abdeckelement (2) in einer befestigten Verbindung mit der Basis (5) steht, der Stift (3) einem Druck ausgesetzt wird, der durch den erhöhten Teil ausgeübt wird, so dass der Stift (3) mit den Zähnen (71) in Kontakt kommt.

2. Die halbkugelförmige Kamera nach Anspruch 1, wobei die halbkugelförmige Kamera außerdem eine elastische Komponente (34) umfasst, die den Stift (3) umhüllt, sodass sich der Stift (3) entlang einer Richtung parallel zur ersten Achse bewegen kann, wenn er dem durch den erhöhten Teil ausgeübten Druck ausgesetzt ist oder nicht.

3. Halbkugelförmige Kamera nach Anspruch 1, wobei
das obere Abdeckelement (2) mit der Basis (5) durch eine Schraube festgezogen und befestigt ist.

4. Halbkugelförmige Kamera nach Anspruch 1, wobei das Linsenelement (1) in einer Neigungsrichtung drehbar ist.

5. Halbkugelförmige Kamera nach Anspruch 1, wobei
der Stift (3) durch ein erstes Durchgangsloch (51) in der Basis (5) hindurchgeht; ein erstes Ende des Stifts (3) dem erhöhten Teil zugewandt ist und ein zweites Ende des Stifts (3) einer an dem verdeckten Drahtgehäuse (7) angeordneten Verriegelungsstruktur zugewandt ist;
der erhöhte Teil auf das erste Ende des Stifts (3) einwirkt, so dass das zweite Ende des Stifts (3) mit der Verriegelungsstruktur in Eingriff steht.

6. Halbkugelförmige Kamera nach Anspruch 5, wobei
das erste Ende des Stifts (3) ein Kopf (31) des Stifts (3) ist und das zweite Ende des Stifts (3) ein Ende (32) des Stifts (3) ist;
eine Schnappfeder (33) an einer axialen Position des Stifts (3) neben dem Ende (32) angeordnet ist und die Außendurchmesser des Kopfes (31) und der Schnappfeder (33) größer sind als der Durchmesser des ersten Durchgangslochs (51).

7. Halbkugelförmige Kamera nach Anspruch 5, wobei
ein einseitiger Spalt zwischen dem Stift (3) und dem ersten Durchgangsloch (51) im Bereich von 0,1 mm bis 0,3 mm liegt.

8. Halbkugelförmige Kamera nach Anspruch 6, wobei das verdeckte Drahtgehäuse (7) Zähne (71) umfasst, die in einer kreisförmigen Anordnung angeordnet sind, und die Zähne (71) an der radialen Kantenposition des verdeckten Drahtgehäuses (7) angeordnet sind.

## Revendications

1. Caméra hémisphérique, comprenant :
un composant d'objectif (1) ;
un composant de couvercle supérieur (2) ayant un capot transparent hémisphérique (22) protégeant le composant d'objectif (1) ;
une partie de base cylindrique (5) supportant le composant d'objectif (1) et le composant de couvercle supérieur (2) ;
un boîtier cylindrique de dissimulation de fil (7) supportant la partie de base (5), une surface du boîtier de dissimulation de fil (7), qui est en contact avec la partie de base (5), étant pourvue d'une ouverture de passage destinée à recevoir un fil du composant d'objectif (1) s'étendant à travers la partie de base (5) ;
un bord périphérique de la surface du boîtier de dissimulation de fil (7) étant pourvu de dents (71) et le boîtier de dissimulation de fil (7) étant conçu de telle sorte que :
lorsque le boîtier de dissimulation de fil (7) n'est pas relié de manière fixe à la partie de base (5), la partie de base (5) entraîne le composant d'objectif (1) de manière à ce qu'il tourne dans une direction P par rapport au boîtier de dissimulation de fil (7), de sorte que le composant d'objectif (1) soit tourné jusqu'à un angle prédéfini ;
lorsque le boîtier de dissimulation de fil (7) est relié de manière fixe à la partie de base (5), les dents (71) du boîtier de dissimulation de fil (7) empêchent une rotation de la partie de base (5) dans la direction P, de sorte que le composant d'objectif (1) soit fixé à l'angle prédéfini,
la partie de base (5) et le boîtier de dissimulation de fil (7) ayant le même premier axe ;
la rotation dans la direction P se référant à une rotation horizontale autour du premier axe,
la caméra hémisphérique comportant également une goupille (3) ;
lorsque le boîtier de dissimulation de fil (7) est relié de manière fixe à la partie de base (5), la goupille (3) touche les dents (71) ;
lorsque le boîtier de dissimulation de fil (7) n'est pas relié de manière fixe à la partie de base (5), la goupille (3) est dégagée des dents (71),
la goupille (3) s'étendant à travers la partie de base dans une direction parallèle au premier axe,
sachant que, lorsque le composant de couvercle supérieur (2) n'est pas relié de manière fixe à la partie de base (5), la goupille (3) est dégagée des dents (71) ;
lorsque le composant de couvercle supérieur (2) est relié de manière fixe à la partie de base (5), la goupille (3) touche les dents (71),
un bord du composant de couvercle supérieur (2) comprend une partie surélevée qui s'étend vers la partie de base (5) ;
lorsque le composant de couvercle supérieur (2) est relié de manière fixe à la partie de base (5), la goupille (3) est soumise à une pression exercée par la partie surélevée, de sorte que la goupille (3) touche les dents (71).

2. La caméra hémisphérique selon la revendication 1, sachant que la caméra hémisphérique comprend également un composant élastique (34) enfilé sur la goupille (3) afin que la goupille (3) puisse se déplacer le long d'une direction parallèle au premier axe lorsqu'elle est soumise ou non à la pression exercée par la partie surélevée.

3. La caméra hémisphérique selon la revendication 1, sachant que le composant de couvercle supérieur (2) est serré et fixé à la partie de base (5) à l'aide d'une vis.

4. La caméra hémisphérique selon la revendication 1, sachant que le composant d'objectif (1) peut tourner dans une direction de graduation.

5. La caméra hémisphérique selon la revendication 1, sachant que
la goupille (3) passe à travers une première ouverture de passage (51) sur la partie de base (5) ; une première extrémité de la goupille (3) est tournée vers la partie surélevée et une deuxième extrémité de la goupille (3) est tournée vers une structure de verrouillage disposée sur le boîtier de dissimulation de fil (7) ;
la partie surélevée agit sur la première extrémité de la goupille (3) de sorte que la deuxième extrémité de la goupille (3) s'engage dans la structure de verrouillage.

6. La caméra hémisphérique selon la revendication 5, sachant que
la première extrémité de la goupille (3) est une tête (31) de la goupille (3) et la deuxième extrémité de la goupille (3) est une extrémité arrière (32) de la goupille (3) ;
un ressort à encliquetage (33) est disposé à une position axiale de la goupille (3) adjacente à l'extrémité arrière (32) et les diamètres extérieurs de la tête (31) et du ressort à encliquetage (33) sont chacun supérieurs au diamètre de la première ouverture de passage (51).

7. La caméra hémisphérique selon la revendication 5, sachant qu'un espace unilatéral entre la goupille (3) et la première ouverture de passage (51) est compris entre 0,1 mm et 0,3 mm.

8. La caméra hémisphérique selon la revendication 6, sachant que le boîtier de dissimulation de fil (7) comprend des dents (71) disposées en cercle, et les dents (71) sont disposées à la position radiale périphérique du boîtier de dissimulation de fil (7).
